# EUROPÄISCHE PATENTANMELDUNG

(11) **EP 1 717 150 A1**
(43) Veröffentlichungstag der Anmeldung: **02.11.2006**
(21) Anmeldenummer: 06112752.8
(22) Anmeldetag: 19.04.2006
(51) Int. Cl.: B65B 11/52, B65B 9/04

(54) **Verfahren und Vorrichtung zum Herstellen von befüllten und dicht versiegelten Kunststoff-Tiefziehbehältern**

(30) Priorität: 19.04.2005 DE 102005018055; 22.08.2005 DE 102005039673
(71) Anmelder: Gerhard Schubert GmbH, 74564 Crailsheim (DE)
(72) Erfinder: Schubert, Gerhard, 74564 Crailsheim (DE)
(74) Vertreter: Müller, Gerald Christian

(57) **Zusammenfassung**

Um Zwischenpuffer und andere aufwendige Maßnahmen zu vermeiden, arbeiten Tiefziehstation, Füllstation und Siegelstation hintereinander an ein und derselben quasi-endlosen, sich permanent vorwärtsbewegenden Behälter-Folienbahn (Fig. 1a). Dadurch, dass mittels Tiefziehen hergestellte Kunststoffbehälter an der laufenden Folienbahn hergestellt und anschließend befüllt und verschlossen werden und erst danach aus der Folienbahn herausgelöst werden, ist eine kompakte Abfüll- und Verpackungsanlage mit geringstmöglichen Aufwand, insbesondere unter Verzicht von dazwischen angeordneten Puffern und Handling-Einrichtungen für vereinzelte Behälter, möglich.

## Beschreibung

### I. Anwendungsgebiet

Die Erfindung betrifft das Herstellen von Kunststoff-Tiefziehbehältern, deren anschließendes Befüllen und Verschließen durch eine aufgesiegelte Folie, sowie Heraustrennen aus der Behälter-Folie.

### II. Technischer Hintergrund

Vor allem napfförmige Kunststoffbehälter werden häufig aus einer entsprechend dicken Kunststofffolie aus einem thermoplastischen Kunststoff tiefgezogen, meist durch Verformen der erwärmten Folie zwischen einer erwärmten Form mit oder ohne Vorstreckstempel und mit Druckdifferenz.

Derartige tiefgezogene Behälter werden anschließend mit dem gewünschten Produkt, meist einem Lebensmittel, befüllt und verschlossen, wobei das Verschließen durch das Darüberlegen einer dünnen Siegelfolie ebenfalls aus einem thermoplastischen Kunststoff geschieht, indem die Siegelfolie durch Erwärmung mittels Heizplatte, Induktion oder Ultraschall mit dem ebenfalls thermoplastischen Material des Behälters umlaufend um die gesamte obere Einfüllöffnung dicht verschlossen wird.

Dabei müssen Siegelfolie und/oder Behälter-Folie nicht unbedingt komplett aus erweichbarem, insbesondere thermoplastischem, Kunststoff bestehen, aber zumindest auf einer damit beschichteten Seite eines andersartigen Trägermaterials. So kann beispielsweise die Siegelfolie als Grundmaterial eine Leichtmetallfolie sein, die lediglich mit dem thermoplastischen Kunststoff einseitig oder zweiseitig beschichtet ist.

Dabei ist es heute üblich, dass beim Lebensmittelhersteller Verpackungsmaschinen stehen, in welche extern fertig hergestellte Trays, also die Kunststoffbehälter, in Stapeln eingegeben und vereinzelt werden, und eine Füllmaschine durchlaufen, an deren Ende die Siegelstation zum Aufbringen der Siegelfolie angeordnet ist.

Die Siegelstation arbeitet dabei taktweise, weshalb sie entweder von der Befüllstation entkoppelt ist, also mit einem Zwischenpuffer dazwischen arbeitet, oder die Befüllstation arbeitet im Takt der Siegelstation.

Sofern die Behälter vor Ort durch Tiefziehen hergestellt werden, und zwar unmittelbar vor der Befüllstation, arbeiten Tiefziehstation und Siegelstation vorzugsweise im gleichem Takt, weshalb die dazwischen befindliche Befüllstation ebenfalls dem gleichen Takt unterworfen wird, um die Entkoppelung zu den beiden benachbarten Stationen über Puffer zu vermeiden.

### Beide Lösungen haben jedoch erhebliche Nachteile:

Externe Vorfertigung von Behältern benötigt zusätzliche Vorlaufzeit für das Herstellen der Behälter als auch deren Lagerhaltung, sowie eine Vereinzelungsstation vor der Befüllstation einschließlich der notwendigen Positionierung der Behälter auf einem Behälterförderer.

Ein getakteter Betrieb der Befüllstation ist bei Befüllen mit festen Einzelprodukten, die mittels eines Produkt-Förderbandes angeliefert werden und mittels Robotern in die Behälter umgesetzt werden, nachteilig für die notwendige Positionserkennung der Einzelprodukte und den daraus resultierenden exakten Zugriff der Roboter auf die Einzelprodukte.

Bei flüssigen Füllungen ist das Abbremsen und wieder Beschleunigen der bereits gefüllten Behälter nachteilig, da es zu einem Herausschwappen der Füllung, zumindest bis auf den Siegel-Rand, führen kann.

Bei Entkoppelung der Füllstation von den beiden benachbarten, getakteten Stationen ist dagegen mit hohem Platzbedarf und Zusatzinvestitionen für die Entkoppelung zu rechnen.

### III. Darstellung der Erfindung

### a) Technische Aufgabe

Es ist daher die Aufgabe gemäß der Erfindung, ein Verfahren sowie eine Vorrichtung zur Verfügung zu stellen, mit der in einem Durchgang befüllte und versiegelte Kunststoff-Tiefziehbehälter kostengünstig und mit geringem Raum- sowie Investitionsbedarf hergestellt werden können.

### b) Lösung der Aufgabe

Diese Aufgabe wird durch die Merkmale der Ansprüche 1, 2 und 10 gelöst. Vorteilhafte Ausführungsformen ergeben sich aus den Unteransprüchen.

Die Reihenfolge
- Herstellen der tiefgezogenen Behälter,
- Befüllen der Behälter mit dem Produkt,
- Verschließen der gefüllten Behälter mit einer aufgesiegelten Folie
ist dabei zwangsweise vorgegeben.

Durch das Ausstanzen der Behälter aus der Folienbahn erst nach dem Befüllen der Behälter ist ein separates Handling der bereits vereinzelten Behälter für den Befüllvorgang nicht notwendig.

Dadurch, dass das Tiefziehen bei laufender, insbesondere kontinuierlich laufender, Behälterfolie, aus denen die Behälter tiefgezogen werden, geschieht, ist es möglich, die Tiefziehstation ohne Entkoppelung unmittelbar vor der Befüllstation zu betreiben, also hintereinander an der gleichen, laufenden Behälterfolie.

Das Tiefziehen erfolgt vorzugsweise mittels Thermoformen, also Erwärmen der thermoplastischen Behälterfolie und Verformung insbesondere durch Negativ-Formen mittels Druckluft und/oder Saugluft in eine Negativ-Form hinein oder auf die Positiv-Form und anschließendes Abkühlen.

Die Behälterfolie wird dabei durch randseitiges Klemmen und Transportieren in den Folienklemmen einer neben den Rändern umlaufenden Hohlbolzenkette gehalten, in Querrichtung gespannt und in Längsrichtung transportiert.

In dem auch das Verschließen der gefüllten Behälter durch Aufsiegeln einer Siegelfolie bei laufender Behälter-Folienbahn, insbesondere kontinuierlich weiterlaufenden, Behälter-Folienbahn geschieht, kann auch die Siegelstation nach der Befüllstation ohne Entkoppelung dazwischen angeordnet werden.

Gleiches gilt für das Herauslösen der Behälter aus der Folienbahn, aus welcher sie durch Tiefziehen erzeugt wurden, was ebenfalls bei laufender Behälterbahn und vorzugsweise erst in oder nach der Siegelstation erfolgt, so dass bis einschließlich des Versiegelns die Fortbewegung der Behälterfolie einerseits ein separates Transportmedium für die Behälter ersetzt und andererseits dadurch die genaue Position der Behälter, auch innerhalb der Behälter-Folienbahn, jederzeit bekannt ist.

Zu diesem Zweck können auch Referenzmarken regelmäßig auf oder in der Folienbahn angebracht sein, oder die Position von Behältern und Produkten optisch z.B. mittels Bildverarbeitung detektiert werden.

Damit können unmittelbar hintereinander und damit mit sehr geringem Platzbedarf an ein und derselben durchgehend bewegten Folienbahn hintereinander das Tiefziehen der Behälter, Befüllen der Behälter, Versiegeln der Behälter und Herauslösen der Behälter aus der Behälter-Folienbahn erfolgen.

Die Geschwindigkeit, mit der die Folienbahn bewegt wird, wird dabei von der langsamsten dieser Stationen vorgegeben, und bei dem Befüllen der Behälter mit festen Produkten, die auf einem separaten Produktförderer angeliefert werden und mittels Roboter, insbesondere mittels Picker, in die Behälter umgesetzt werden, wird dies meist speziell durch die Steuerung der Befüllstation, also der Picker, vorgegeben, dabei speziell der Steuerung des letzten, in Durchlaufrichtung der Behälter an einer Behälterbahn arbeitenden, Pickers.

In einer bevorzugten Ausführungsform sind auf beiden Seiten des Produktförderers parallel laufend jeweils eine Behälterfolienbahn angeordnet, in deren Verlauf die Behälter jeweils tiefgezogen, gefüllt, versiegelt und aus der Bahn herausgelöst werden.

Die Picker zum Füllen der Behälter befinden sich dabei oberhalb des Produktförderers und sind in Längsrichtung abwechselnd jeweils einer der Behälterbahnen zugeordnet und befüllen diese.

Bei Ausfall oder Störungen einer der Behälterbahnen arbeitet die andere Behälterbahn unabhängig davon weiter, insbesondere aufgrund der bei jedem einzelnen Picker vorhandenen separaten Steuerung, die mit den Steuerungen aller anderen Picker in Verbindung steht.

Falls die Picker von ihrer Reichweite her beide Behälterbahnen erreichen können, können bei Ausfall der einen Behälterbahn die ursprünglich für diese Behälterbahn arbeitenden Picker zusätzlich die andere, funktionierende, Behälterbahn befüllen.

Da in der Regel die Füllgeschwindigkeit, die mittels der Picker erreicht werden kann, die Geschwindigkeitsbegrenzung der ganzen Anlage darstellt, kann dann die Durchlaufgeschwindigkeit dieser funktionierenden Behälterbahn soweit erhöht werden, dass nur ein geringer oder gar kein Leistungsabfall der Anlage zustande kommt.

Dabei erfolgt die Anlieferung der Produkte auf dem Produktförderer vorzugsweise in Gegenrichtung zur Durchlaufrichtung der Behälterfolie, da hierdurch zum Einen durch die Parallellage der beiden Transportrichtungen die Maschine schmal baut und zum Anderen - vor allem wenn unterschiedliche Produkte durcheinander auf dem gleichen Produktförderer lediglich in der richtigen statistischen Häufigkeit zueinander angeliefert werden - die Wahrscheinlichkeit einer nicht vollständigen oder nicht relations-richtigen Befüllung der Behälter sehr gering wird, da in Richtung des zunehmenden Befüllungsgrades der einzelnen Behälter die Verfügbarkeit an Produkten auf dem Produktförderer zunimmt.

Dennoch kann es für die vollständige Befüllung einzelner Behälter notwendig werden, kurzfristig die Relativgeschwindigkeit der Behälterfolie relativ zum Produktförderer zu verändern, um entweder nicht vollständig oder nicht richtig gefüllte Behälter zu vermeiden oder verbleibende Produkte auf dem Produktförderer zu vermeiden.

Dies wird von der Steuerung der Befüllstation berücksichtigt, und von dieser wird auch der Durchlauf der Behälterfolie durch Tiefziehstation und Siegelstation analog verändert.

Die Auslösestation, an der die Behälter aus der Bahn der Behälterfolie herausgetrennt werden, ist dabei vorzugsweise teilweise mit der Siegelstation identisch, in dem die Siegelstation neben dem um die Behälter umlaufend umgebenden Siegelwerkzeug, welches beispielsweise mittels Ultraschall verschweißt, ein Stanzwerkzeug zum Freistanzen oder zum annähernden Durchstanzen der Dicke von Behälterfolie und Siegelfolie aufweist.

Die andere Möglichkeit besteht darin, die Dicke der Folie vollständig zu durchstanzen, aber über den Umfang verteilt noch Haltestege zu, Restfolie hin stehen zu lassen.
Das tatsächliche Durchtrennen der Restdicke dieser Folie erfolgt danach stromabwärts durch ein zu stark gekrümmtes Wegführen der restlichen Folienbahn aus der Hauptebene der Siegelstation, die von den ausgeprägten und damit biegesteiferen Behältern nicht mitgemacht wird, sondern lediglich von dem ebenen Material der Restfolie, wodurch die als Sollbruchstelle gedachte Restdicke an den Stanzstellen um die Behälter herum und außerhalb der Siegelnähte zwischen Siegelfolie und Behälter abreißt.

Die Restfolie wird danach aufgewickelt oder geshreddert.

Dabei erfolgt vorzugsweise auch das Beinahe-Ausstanzen mittels einer Stanzkante, die wie der Siegel-Stempel für die Siegelfolie mittels Ultraschall beaufschlagt wird, so dass durch das dabei erfolgende Aufschmelzen eine saubere spätere Schnittkante erzielt wird und insbesondere so genanntes Engelshaar, nämlich vom Behälterrand abstehende feine Kunststofffasern, insbesondere der Siegelfolie, vermieden werden.

Dabei muss das vollständige Durchstanzen mittels des Werkzeuges auch nur an einer Stelle des Umfanges des Behälters vermieden werden, da ein direkter Kontakt von Ober- und Unterwerkzeug zu einem Beschädigen der produkt-spezifischen Stanzkante und/oder der ebenen, insbesondere nicht produkt-spezifischen Sonotrode führen würde.

Falls je nach Anwendungsfall beim Stanzen vollständig durchgestanzt werden soll, kann auf der dem Stanzwerkzeug abgewandelten Seite, also vorzugsweise auf Seiten der Siegelfolie, eine zusätzlich mit Behälterfolie und Siegelfolie nicht verbundene, mitgeführte Schutzfolie zugeführt werden als Abstandshalter zwischen Stanzkante und Sonotrode, in die somit die Stanzkante noch eindringt, aber diese nicht mehr ganz durchdringt, wodurch die Behälter vollständig ausgestanzt werden.

Das Tiefziehen und/oder Siegeln der Behälter bei sich bewegender Behälterfolie beim Siegeln als auch der ebenfalls endlosen, von oben zugeführten, Siegelfolie wird ermöglicht, indem die Tiefzieheinheit und/oder die Siegeleinheit gegebenenfalls einschließlich der Stanzkante, mit der Bewegung der Behälter-Folienbahn während der Betätigung dieser Einheiten mitbewegt und nach dem Deaktivieren wieder in Gegenrichtung zur Ausgangsposition zurückbewegt werden.

Um vor allem die Reinigung der Maschine zu erleichtern, was beim Abfüllen von Lebensmitteln von entscheidender Bedeutung ist, sind die Tiefziehstation und/oder die Siegelstation und/oder die Stanzstation freihängend im Maschinengestell angeordnet und entlang von schienenartigen Führungen in Durchlaufrichtung beweglich und angetrieben, wie auch insbesondere alle Funktionseinheiten dieser Maschine hängend am Gestell befestigt sind.

Die Maschine ist dabei modulartig aufgebaut, indem jede Station ihr eigenes Maschinengestell aufweist, vorzugsweise bestehend aus vertikal aufragenden Tragsäulen, die jeweils einen rechteckig oben umlaufenden Oberrahmen tragen, an dem alle Aggregate aufgehängt sind, bei in Durchlaufrichtung beweglichen Aggregaten insbesondere die hierfür in Durchlaufrichtung verlaufenden Führungen, entlang denen ein Wagen verfahrbar ist.

Die Füllstation kann dabei hinsichtlich ihrer Art ausgetauscht werden, um die Behälter sowohl mit festen Produkten mittels Pickern als auch mit einer anderen Art von Produkten, insbesondere flüssigen oder pastösen Füllungen, mittels einer anderen Art von Befüllstation, befüllen zu können.

Indem mittels wenigstens eines Produktförderers, der parallel, aber vorzugsweise im Gegenlauf, zwischen zwei parallel im Abstand geführten Behälter-Folienbahnen angeordnet wird, können beide Behälterbahnen mit Produkten versorgt werden, an denen die Kunststoffbehälter jeweils unabhängig voneinander tiefgezogen, befüllt, verschlossen und aus der Folienbahn herausgelöst werden. Dies ergibt eine besonders kompakte und effiziente Bauform der Anlage.

In dem im Normalbetrieb die über dem mittigen Produktförderer angeordneten Picker zum Befüllen der beiden außenseitigen Folienbahnen jeweils einer der Bahnen zugeordnet sind, aber insbesondere jeweils beide Bahnen erreichen können, können bei Problemen oder Ausfall der einen Behälterbahn alle Picker die Behälter der anderen Behälterbahn füllen und damit gegebenenfalls deren Kapazität erhöhen.

Ebenso wird die Effektivität der Anlage dadurch gesteigert, indem jeder Picker eine eigene Steuerung umfasst, die miteinander verbunden sind und kommunizieren. Der in Durchlaufrichtung der Behälterbahn dieser Behälterbahn zugeordnete jeweils letzte Picker steuert mit seiner Steuerung die Geschwindigkeit dieser Behälterbahn, um zu vermeiden, dass nicht vollständig und richtig gefüllte Behälter seinen Arbeitsbereich verlassen.

Bei Ausfall dieses steuernden letzten Pickers übernimmt der letzte funktionierende Picker, in der Regel also der vorhergehende Picker, diese Aufgabe automatisch, da aufgrund einer z. B. regelmäßigen Abfrage aller Picker-Steuerungen untereinander der Ausfall des letzten Pickers von den anderen Pickern, auch dem vorhergehenden funktionierenden Picker, sofort bemerkt wird.

Die Entfernbarkeit der Heizeinheit für die Behälterfolie vor dem Tiefziehen, insbesondere deren oberer und unterer Heizplatte in Querrichtung, ermöglicht bei Verlangsamung oder Stillstand der Folienbahn das schnelle Beenden der Aufheizung der Folie, um deren Reißen, besonders beim Wiederanlauf, zu verhindern.

Durch eine Kühlung der Heizplatten, insbesondere mittels Durchflutung mit Wasser, kann deren Temperatur schnell abgesenkt werden, was aus dem gleichen Grund notwendig sein kann, oder für das Wechseln der Werkzeuge, um die Wartezeit zwischen Abschalten der Heizung und Wechseln der Werkzeuge zu verringern.

Ebenso wird auch wenigstens eines der Tiefziehwerkzeuge gekühlt, um die verformte, erwärmte Folie schnell abzukühlen und zu verfestigen, und die Zykluszeit des Tiefziehprozesses zu reduzieren.

Ebenso der Effizienzsteigerung dient das automatische, insbesondere ohne Stillstand der Folienbahn mögliche, Ansetzen einer neuen Folienbahn, indem bei Ende einer Folienbahn der Beginn der nächsten Folienbahn von der nächsten Vorratsrolle automatisch in die Folien-Transportvorrichtung eingefädelt und weitertransportiert wird.

Der Wechsel der Vorratsrollen auf dem Tragdorn ist auf besonders schnelle und einfache Art und Weise möglich, indem nach dem Aufschieben des hohlen Rollenkernes auf den Tragdorn die Rolle auf dem Dorn aufgespannt wird durch radial ausfahrbare, sich vorzugsweise über die gesamte Breite der Rolle erstreckende, Spannleisten, die insbesondere pneumatisch betrieben werden und aus radial aufblasbaren Schläuchen bestehen.

Weiterhin werden Fehlfunktionen der Maschine vermieden und die Umrüstung beim Werkzeugwechsel beschleunigt, indem die Werkzeuge eine maschinen-lesbare Codierung aufweisen, die beim Einsetzen der Werkzeuge in die Maschine automatisch von entsprechenden Sensoren der Maschine gelesen werden und daraufhin in der oder den Steuerungen der Maschine die entsprechenden, zu diesen Werkzeugen bzw. Werkzeugsätzen gehörigen Programme geladen und gestartet werden.

Um eine möglichst hohe Qualität des Arbeitsergebnisses zu bewirken, sind die in Querrichtung beweglichen Werkzeuge mittels digital programmierbarer Servomotoren exakt positionierbar, der beim Thermoformen und/oder Siegeln einwirkende Umformdruck bzw. Siegeldruck durch Drucksensoren überprüfbar, damit mangelhafte Behälter nicht weiter bearbeitet werden, und möglichst alle Verfahrwege von beweglichen Komponenten ebenso digital einstellbar wie die Arbeitsparameter - insbesondere Amplitude, Schweißzeit und Haltezeit - des Ultraschallsiegelvorganges digital einstellbar.

### c) Ausführungsbeispiele

Ausführungsformen gemäß der Erfindung sind im Folgenden beispielhaft näher beschrieben. Es zeigen:
- Fig. 1:: die erfindungsgemäße Anlage in der Seitenansicht,
- Fig. 2: die erfindungsgemäße Anlage in der Aufsicht,
- Fig.3: die Transportvorrichtung für die Behälterbahn, und
- Fig. 4: die Halterung für die Vorratsrolle.

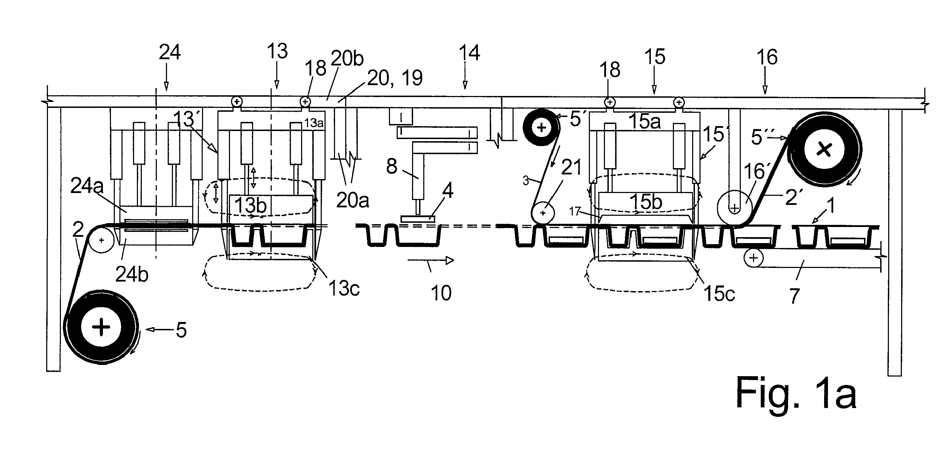

Fig. 1a zeigt die von links nach rechts durchgehende, quasi-endlose Behälter-Folienbahn 2, die von einer Vorratsrolle 5 abgewickelt wird und deren Rest-Folienbahn 2', also nach dem Austanzen der einzelnen befüllten und geschlossenen Behälter 1, wieder auf einer Restrolle 5' aufgewickelt wird.

Am Arbeitstrum dazwischen wird die Behälter-Folienbahn 2 gerade, insbesondere horizontal, geführt und an diesem Arbeitstrum arbeiten die einzelnen Stationen der erfindungsgemäßen Anlage, nämlich Tiefziehstation 13, Füllstation 14, Siegelstation 15 und Auslösestation 16 in Durchlaufrichtung 10 der Folien-Bahn 2 hintereinander.

All diese Arbeitsstationen sind hängend an insbesondere horizontal ebenfalls in Durchlaufrichtung 10 verlaufenden Führungen 19 aufgehängt, die sich oberhalb des Arbeitstrumes der Behälter-Folienbahn 2 befinden und wobei zumindest die Tiefzieheinheit 13' der Tiefziehstation 13 als auch die Siegeleinheit 15' der Siegelstation 15 in Durchlaufrichtung 10 beweglich, nämlich hin- und herbeweglich in und gegen die Durchlaufrichtung 10, aufgehängt sind mittels Rollen 18, während die Füllstation 14 als auch die Auslösestation 16 fest an dem Maschinengestell 20 und insbesondere den Führungen 19 angeordnet sein können.

Die Maschine ist dabei modulartig aufgebaut, indem jede Station ihr eigenes Gestell 20 aufweist mittels vier im Viereck positionierten, vertikalen Tragsäulen 20a, zwischen denen die Behälterbahn 2 durch läuft, und die jeweils einen am oberen Ende der Tragsäulen umlaufenden Oberrahmen 20b tragen, indem insbesondere die Führungen 19 befestigt sind. Die einzelnen Gestelle 20 sind gegeneinander fixiert.

Da lediglich die Tragsäulen 20a auf den Untergrund aufsitzen, erleichtert dies die Reinigung der gesamten Anlage, was besonders beim Abpacken von Lebensmitteln von großer Bedeutung ist.

Wie Fig. 1a zeigt, besteht dabei die Tiefzieheinheit 13' aus einem an den Führungen 19 verfahrbaren Wagen 13a, während das eigentliche Tiefziehwerkzeug aus einem Oberwerkzeug 13b, insbesondere einem vertikal festen Spannrahmen, und einem demgegenüber negativ geformten, vertikal beweglichen Unterwerkzeug 13c besteht, die vertikal gegeneinander gefahren werden können. Dabei ist das Unterwerkzeug 13c und der Spannrahmen kühlbar, so dass die mittels einer oberen und unteren Heizplatte 24a,b (Heizeinheit 24) vorgeheizte Behälter-Folienbahn 2 zwischen den Werkzeugen zu den napfförmigen Behältern verformt werden und schnell abgekühlt und erstarrt werden können. Die Heizeinheit 24 ist vorzugsweise - wie die Tiefzieheinheit 13' - als Wagen in Richtung der Folienbahn 2 verfahrbar und fährt mit dieser abschnittsweise zyklisch mit, wie der Wagen 13a.

Dazu wird insbesondere das Unterwerkzeug 13c bis an die Unterseite der unverformten Folienbahn 2 angehoben, und presst diese abdichtend gegen das Oberwerkzeug 13b in der Regel einen Spannrahmen. Dann wird die erwärmte, weiche Behälter-Folienbahn 2 z.B. mittels Druckluft und/oder Unterdruck in das Unterwerkzeug 13c hineingezogen.

Während dieses Tiefziehens in das von unten bereits an das Unterwerkzeug 13c angenäherte Unterwerkzeug 13c relativ zum Wagen 13a, verfährt der Wagen 13a in Durchlaufrichtung 10 synchron zusammen mit der Behälter-Folienbahn 2 und ohne Relativgeschwindigkeit in dieser Durchlaufrichtung 10.

Nach Beendigung des Tiefziehvorganges wird während der Längsbewegung das Unterwerkzeug 13c relativ zur Behälter-Folienbahn 2 abgesenkt, bis sie beide in Durchlaufrichtung nicht mehr mit den daran ausgeprägten Behältern 1 formschlüssig verbunden sind, und werden dann entgegen der Durchlaufrichtung 10 zurück bewegt und wieder in Richtung Behälter-Folienbahn 2 angenähert, so dass ein erneuter Tiefziehzyklus vollzogen werden kann.

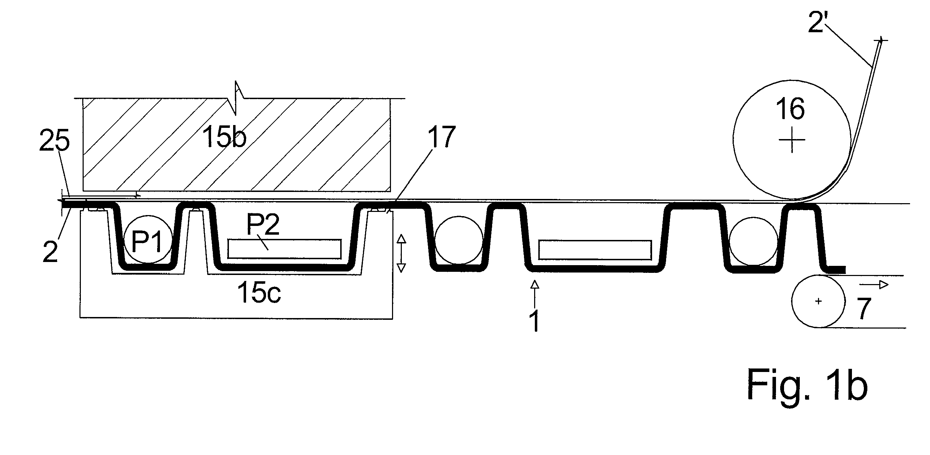

In der anschließenden Füllstation 14 arbeitet im Beispiel der Fig. 1 ein an den Führungen 19 aufgehängter so genannter Picker 8, also ein mit mindestens zwei Armteilen 8a,b, die in einer horizontalen Ebene verschwenkbar sind, bestehender

Auslegerarm, an dessen freien Ende der Pickerkopf 8c, der meistens mit Druckluft arbeitet und in der Lage ist, ein Produkt P1, P2..., welches in seinen Greifbereich angeliefert wurde, anzusaugen und zu halten, und exakt positioniert in einer der napfartigen Vertiefungen der unter der Füllstation 14 durchlaufenden Behälter-Folienbahn 2 mit darin ausgeprägten Behältern 1 abzulegen.

Von derartigen Pickern 8 können mehrere hintereinander in Durchlaufrichtung 10 vorhanden sein je nach Anzahl der individuell einzusetzenden Produkte P1, P2...

In Durchlaufrichtung nach der Füllstation 14 befindet sich die Siegelstation.

Dabei wird eine Siegelfolie 3, zugeführt von einer Vorratsrolle 5" parallel laufend mit der Behälter-Folienbahn 2 und in einer Breite mindestens entsprechend der Breite der Behälter 1, auf die Oberseite der Behälter-Folienbahn 2 aufgebracht mittels einer knapp oberhalb der Behälter-Folienbahn 2 quer angeordneten Umlenkrolle 21 für die von oben zugeführte Siegelfolie 3, wobei die Umlenkrolle 21 auch als Anpressrolle ausgebildet sein kann.

Stromabwärts der Zusammenführung von Siegelfolie 3 und Folienbahn 2 wird die Siegelfolie 3 auf den nicht tiefgezogenen, also unverformten Bereichen zwischen den Vertiefungen der Behälter 1 auf der Oberfläche der Behälter-Folienbahn 2 aufgeschweißt, was beispielsweise mittel Ultraschallschweißen geschehen kann.

Auch hierfür werden - diesmal die Behälter-Folienbahn 2 und die Siegelfolie 3 gemeinsam übereinander liegend - zwischen einem Oberwerkzeug 15a und einem Unterwerkzeug 15c, die sich von oben bzw. von unten annähern und dabei synchron in Durchlaufrichtung 10 mit den Folienbahnen 2, 3 mitbewegen, gegeneinander versiegelt.

Auch hier sind Oberwerkzeug 15b und Unterwerkzeug 15c an einem Wagen 15a der Siegeleinheit 15' aufgehängt und wenigstens eines davon relativ zu diesem Wagen 15a vertikal bewegbar analog zur Tiefzieheinheit 13', und vollziehen auch die gleiche Zyklusbewegung oberhalb und unterhalb der Behälter-Folienbahn 2.

Wie vor allem die vergrößerte Darstellung der Fig. 1b zeigt, ist dabei am Unterwerkzeug 15c zusätzlich eine umlaufende Stanzkante 17 ausgebildet, die z.B. von unten in das Paket aus Siegelfolie 3 und Behälter-Folienbahn 2 eindringt, die sie aber nicht vollständig durchstanzt, sondern nur vorstanzt.

Dieser Stanzvorgang kann auch mittels eines separaten Stanzwerkzeuges oder einer Stanzrolle nach dem Siegeln in einer Siegelstation 15 separat durchgeführt werden.

Falls doch ganz durchgestanzt (freigestanzt) werden soll, wird oberhalb der Siegelfolie 3 eine zusätzliche Schutzfolie 25 zugeführt und mitbewegt, die als Abstandshalter zwischen der Stanzkante 17 und dem Oberwerkzeug 15b, welches ja insbesondere als die Ultraschallbeaufschlagung liefernde ebene Sonotrode ausgebildet ist, zugeführt.

In Durchlaufrichtung 10 folgt als nächstes die Auslösestation 16, die das Herauslösen der gefüllten und versiegelten Behälter 1 aus der Behälter-Folienbahn 2 entsprechend der vorgestanzten Kontur erledigt.

Dies geschieht durch Herausführen der Behälter-Folienbahn 2 mit Siegelfolie 3 aus der Ebene des Arbeitstrumes nach oben durch Umlenken um eine Auslöserolle 16', deren Krümmungsradius so gewählt ist, dass die zwischen den Vorstanzungen vorhandene unverformte Restfolie 2' diese Biegung um die Auslöserolle 16' herum mit vollzieht, die tiefgezogenen und dadurch gegen Biegung stabilisierten Behälter 1 dagegen diese Biegung weniger gut vollziehen können und dadurch die Vorstanzung abreißt und sich die Behälter 1 selbsttätig aus der Restfolie lösen, die zu diesem Zweck ab der Auslöserolle 16' natürlich auf einem Behälterförderer 7 oder einer anderen Transportvorrichtung aufliegen und abtransportiert werden müssen.

Aus dieser Zusammenschau wird klar, dass die an der im Regelfall sich gleichmäßig in Durchlaufrichtung 10 bewegenden Behälter-Folienbahn 2 arbeitenden Stationen von einer gemeinsamen Steuerung 9 aus gesteuert werden müssen, wobei vorzugsweise die Geschwindigkeit der am langsamsten arbeitenden Station, häufig der Füllstation 14, die Durchlaufgeschwindigkeit vorgibt und vor allem den Arbeitstakt der reversierenden Tiefziehstation 13 und Siegelstation 15.

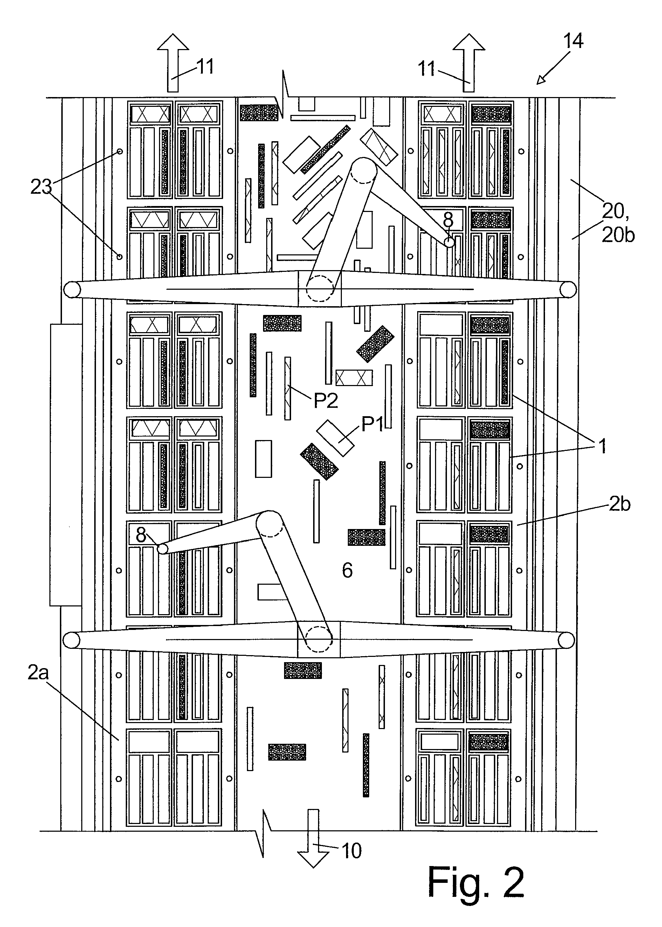

Fig. 2 zeigt in der Aufsicht von oben, dass für die Synchronisierung der Bewegungen der einzelnen Stationen und Einheiten vor allem in den Randbereichen der Behälter-Folienbahn 2 vorhandene optische oder mechanische Referenzmarken (z.B. regelmäßige Lochungen) dienen können, die von entsprechenden Sensoren, bei einer Lochung, z.B. einfachen Stiften, der einzelnen Arbeitsstationen und deren Einheiten erkannt und angefahren werden können falls die Position der Behälter 1 und Produkte P1, P2 nicht optisch detektiert und weitergerechnet werden.

Fig. 2 zeigt weiterhin, dass in einer bevorzugten Ausführungsform und einer notwendigen Befüllung der Behälter 1 mit festen Produkten P1, P2... zwei Behälter-Folienbahnen 2a, b parallel zu dem die Produkte anliefernden Produktförderer 6 verlaufen, sich jedoch zu diesem im Gegenlauf 11 bewegen.

Dies hat den Vorteil, dass die Wahrscheinlichkeit, mangels fehlender Anlieferungen des richtigen Produktes P1, P2.... nicht vollständig oder nicht in der richtigen Mischung gefüllte Behälter 1 zu erzeugen, sehr gering ist, da beim Anliefern unterschiedlicher Produktsorten P1, P2.... auf dem Produktband 6 durcheinander in derjenigen Richtung, nämlich der Fortschrittsrichtung des Produktbandes 6, in der sich das Produktband mehr und mehr leert, die Verfügbarkeit eines entsprechenden freien Platzes im Behälter 1 umso größer wird und umgekehrt.

Zusätzlich erhöht dies die Ausfallsicherheit der Anlage, da bei Ausfall einer der Behälter-Folienbahnen 2a die andere Bahn 2b weiter funktioniert, und gegebenenfalls die die Bahn 2a füllenden Picker dann zusätzlich die Behälter der Bahn 2b füllen, was insbesondere bei Anlagen, bei denen die Anlieferung der Produkte P1, P2... nicht ohne weiteres gestoppt werden kann, von großer Bedeutung ist.

In der Regel erfolgt dabei eine optische Abtastung nicht nur des Produktbandes 6, sondern auch der Behälter-Folienbahn 2, um die Vollständigkeit der Füllung der Behälter 1 zu kontrollieren.

Sollte es hier zu Zeitproblemen beim vollständigen und richtigen Befüllen der Behälter 1 kommen, kann die Durchlaufgeschwindigkeit der Behälter-Folienbahn 2 auch nur für begrenzte Zeit abgesenkt werden. Ein vollständiges Anhalten der Behälter-Folienbahn 2 ist dagegen wenn irgendwie möglich zu vermeiden, und auch das Absenken der Durchlaufgeschwindigkeit unter einem Minimumwert, um die davon abhängigen Parameter wie Einwirkzeit der Tiefziehwerkzeuge auf die Folie usw. nicht korrigieren zu müssen.

Notfalls wird dabei die Durchlaufgeschwindigkeit des Bandes 2 innerhalb eines Arbeitszyklus variiert, das heißt beispielsweise die Behälter-Folienbahn 2 in den Zeitabschnitten, in denen die Tiefzieheinheit 13' und/oder die Siegeleinheit 15' auf die Behälter-Folienbahn 2 einwirken, schnell bewegt, dazwischen jedoch wesentlich langsamer bewegt oder gar kurzeitig vollständig angehalten.

Um die Flexibilität der Anlage zu gewährleisten, sind selbstverständlich die Ober- und Unterwerkzeuge 13b,c, 15b,c austauschbar, die vertikalen Hubbewegungen einstellbar und auch bei den Pickern 8 auch nicht nur der Pickerkopf 8c, sondern die gesamte Füllstation 14 austauschbar, beispielsweise gegen eine Füllstation zum Verfüllen von flüssigen oder pastösen Produkten anstatt von festen Produkten P.

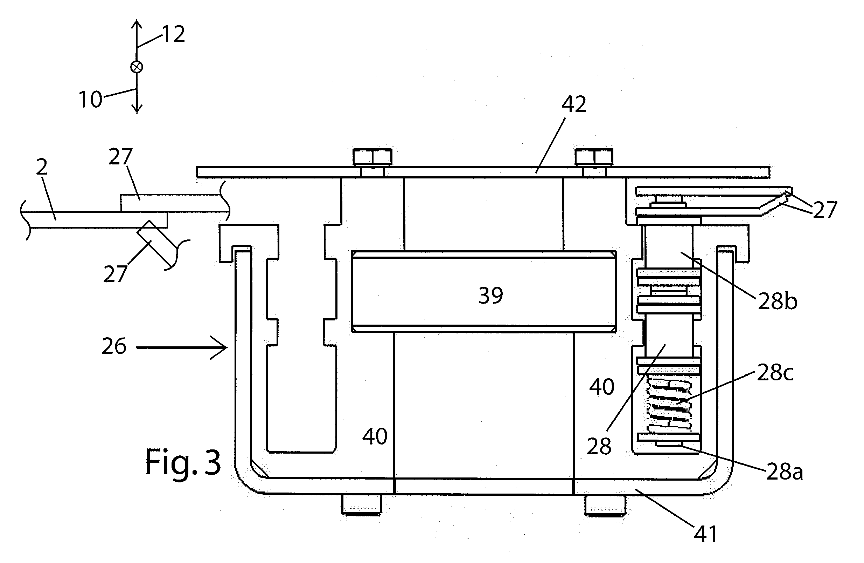

Die Fig. 3 zeigt - betrachtet in Durchlaufrichtung 10, also im Querschnitt - die Folien-Transportvorrichtung 26, wie sie seitlich an jeder der beiden Außenkanten der Behälter-Folienbahnen 2 vorhanden ist und mittels Folien-Greifern 27 die Ränder der Folienbahnen 2 in Querrichtung 12 zur Folienebene klemmt und mittels der in Durchlaufrichtung 10 synchron bewegten beiden Transportvorrichtungen 26 weiter bewegt.

Die Transportvorrichtung 26 besteht aus einer endlos in einer horizontalen Ebene seitlich neben der Folienbahn 2 um zwei Ritzel umlaufenden Hohlbolzenbuchsen-Kette 28, die sich insbesondere über die gesamte Länge der Anlage hinweg erstreckt, so dass sich das eine Ritzel in Durchlaufrichtung vor der Tiefziehstation und das andere Ritzel hinter der Auslösestation 16 befindet, wobei eines der Ritzel motorisch angetrieben ist.

Die Kettenglieder stehen dabei aufrecht und sind in entsprechend geformten, in Durchlaufrichtung 10 verlaufenden, Führungsprofilen 40 - die insbesondere aus Kunststoff bestehen - geführt, welche vorzugsweise spiegelbildlich und beidseits einer zentralen, ebenfalls in Durchlaufrichtung 10 verlaufenden, Tragschiene 39 angeordnet und befestigt sind.

Die Führungsprofile 40 sind dabei vorzugsweise formschlüssig in einem U-Profil 41 aufgenommen und mittels eines von oben aufgeschraubten Abdeckbleches 42 gehalten, wobei zwischen dem oberen, offenen Ende des U-Profils 41 und dem Abdeckblech 42 ein nach außen offener Abstand verbleibt.

Indem die Führungsprofile 40 selbst U-förmig und nach oben offen gestaltet sind, ragen aus diesen oberen Öffnungen die oberen Enden der Kettenglieder heraus, von denen nach radial außen die armförmigen, in Querrichtung 12 gegeneinander pressbaren Folien-Greifer 27 nach außen ragen und bei dem in Fig. 3 links angedeuteten Arbeitstrumm der Kette 28 die Folie 2 zwischen sich klemmen.

Von den beiden Greifern 27 ist dabei der eine mit dem Innenbolzen 28a verbunden, der in Querrichtung 12 im Inneren je eines Hohlbolzens 28b der Kette 28 verschiebbar ist, wobei eine zwischen beiden angeordnete Druckfeder 28c die beiden Greifer 27 gegeneinander vorspannt.

Ein derartiges Paar von Greifern 27 ist vorzugsweise an jedem der Kettenglieder angeordnet.

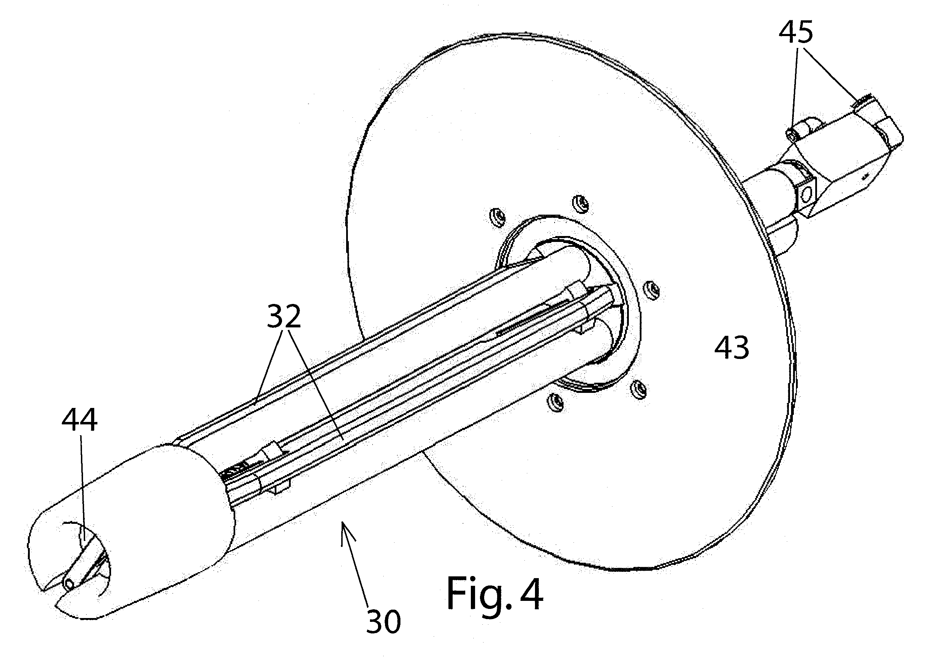

Fig. 4 zeigt die Halterung für eine Folienrolle, insbesondere eine nicht dargestellte Vorratsrolle 5, die jeweils einen hohlen Wickel-Kern 31 aufweisen.

Die Halterung besteht im Wesentlichen aus einer Anschlagscheibe 43 und von dieser zentral in quer abstehenden Tragdorn 30, die zusammen drehbar am nicht dargestellten Maschinengestell 20 befestigt sind.

Auf den Längsaußenseiten des Tragdornes 30 sind radial ausfahrbare Spannleisten 32, insbesondere drei Stück über den Umfang verteilt, angeordnet, denen am freien Ende des Tragdornes 30 ein konisches Endteil zum leichteren Aufschieben des Kerns 31 der Vorratsrolle 5 vorgelagert ist.

Im nicht radial ausgefahrenen Zustand der Spannleisten 32 ist durch diese ein Außenumfang festgelegt, der kleiner ist als der Innenumfang des Kernes 31, so dass die Rolle 5 bis zum Anschlag an die Anschlagscheibe 43 einfach auf den Tragdorn 30 aufgeschoben werden kann.

Durch anschließendes Aufpumpen der in diesen Fall aus radial erweiterbaren Schläuchen bestehenden Spannleisten 32 wird der Kern 31 der Rolle 5 drehfest und längsfest auf den Tragdorn 30 zuverlässig verspannt.

Das Aufspannen erfolgt durch Betätigen eines Schalters 44 in der vorderen frei zugänglichen Stirnfläche des Tragdornes 30, über den die über die Anschlüsse 45 zugeführte Druckluft Zugang zu den Spannleisten 32 erhält.

### BEZUGSZEICHENLISTE

- 1: Behälter
- 2a,b: Behälter-Folienbahn
- 2'a,b: Rest-Folienbahn
- 3: Siegel-Folie
- 4': Füllung
- 5, 5', 5": Vorratsrolle, Restrollen
- 6: Produktförderer
- 7: Behälterförderer
- 8: Picker
- 9: Steuerung
- 10: Durchlaufrichtung (Folie)
- 10a, b: Längsposition
- 11: Gegenlauf
- 12: Querrichtung
- 13: Tiefziehstation
- 13': Tiefzeiheinheit
- 13a: Wagen
- 13b: Oberwerkzeug
- 13c: Unterwerkzeug
- 14: Füllstation
- 15: Siegelstation
- 15': Siegeleinheit
- 15a: Wagen
- 15b: Oberwerkzeug
- 15c: Unterwerkzeug
- 16: Auslösestation
- 16': Auslöserolle
- 17: Stanzkante
- 18: Rolle
- 19: Führung
- 20: Gestell
- 20a: Tragsäule
- 20b: Oberrahmen
- 21: Umlenkrolle
- 23: Referenzmarken
- 24: Heizeinheit
- 24a,b: Heizplatte
- 25: Schutzfolie
- 26: Folien-Transportvorrichtung
- 27: Folien-Greifer
- 28: Hohlbolzenbuchsen-Kette
- 28a: Innenbolzen
- 28b: Hohlbolzen
- 28c: Feder
- 29: Anschlag
- 30: Tragdorn
- 31: Kern
- 32: Spannleiste
- 33: Codierung
- 34: Feder
- 35: Einlauf-Vorrichtung
- 36: Kühlplatte
- 37: Formplatte
- 38: Kühlkanal
- 39: Tragschiene
- 40: Führungsprofil
- 41: U-Profil
- 42: Abdeckblech
- 43: Anschlagscheibe
- 44: Schalter
- 45: Anschluss
- P1, P2: Produkte

## Patentansprüche

1. Verfahren zum Tiefziehen, insbesondere Thermoformen, von napfförmigen Kunststoffbehältern (1) aus einer zugeführten endlosen Behälterfolie (2), Befüllen der Behälter (1) und Verschließen der gefüllten Behälter (1) sowie Stanzen der Behälter (1) aus der Behälter-Folienbahn (2),
**dadurch gekennzeichnet, dass**
das Ausstanzen nach dem Befüllen der Behälter (1) erfolgt.

2. Verfahren zum Tiefziehen, insbesondere Thermoformen, von napfförmigen Kunststoffbehältern (1) aus einer zugeführten endlosen Behälterfolie (2), Befüllen der Behälter (1) und Verschließen der gefüllten Behälter (1) sowie Stanzen der Behälter (1) aus der Behälter-Folienbahn (2),
**dadurch gekennzeichnet, dass**
- das Tiefziehen bei laufender Behälter-Folie (2) erfolgt, und/oder insbesondere
- das Verschließen durch Aufsiegeln einer Siegel-Folie (3) und/oder Herauslösen der Behälter (1) aus der Behälter-Folienbahn (2) bei laufender Folienbahn (2) erfolgt, und/oder insbesondere
- das Tiefziehen, Befüllen, Versiegeln der Behälter (1) und Herauslösen der Behälter (1) aus der Behälter-Folie (2) an unterschiedlichen Längspositionen (10a, b) der gleichen Anlage geschieht, und/oder insbesondere
- das Befüllen durch Einsetzen von festen Produkten (4) oder Einfüllen von pastösen oder flüssigen Füllungen (4') in die Behälter (1) erfolgt, die im Gegenlauf (11) zur Durchlaufrichtung (10) der Behälter-Folie (2) oder quer (12) hierzu herantransportiert werden.

3. Verfahren nach einem der vorhergehenden Verfahrensansprüche,
**dadurch gekennzeichnet, dass**
- beim Füllen mit festen Produkten (4) das Umsetzen der Produkte (4) vom anliefernden Produkt-Förderer (6) in die Behälter (1) mittels Robotern, insbesondere Pickern (8), geschieht und die Geschwindigkeit der Behälter-Folie (2) von der Steuerung (9) der Roboter bzw. Picker gesteuert wird, insbesondere in Abhängigkeit von der Anlieferungsdichte von Produkten (P1, P2,) auf dem zuliefernden Produkt-Förderer (6), und/oder insbesondere
- die Geschwindigkeit der Behälter-Folie (2) in der Tiefziehstation (13) die gleiche ist wie in der Füllstation (14), und/oder insbesondere
- die Geschwindigkeit der Behälter-Folie (2) in der Füllstation (14) die gleiche ist wie in der Siegelstation (15) und/oder Auslösestation (16).

4. Verfahren nach einem der vorhergehenden Verfahrensansprüche,
**dadurch gekennzeichnet, dass**
- die Tiefzieheinheit (13') und/oder die Siegeleinheit (15') und/oder die Stanzeinheit während des Vorganges mit der Behälter-Folie (2) mitbewegt werden, und/oder insbesondere
- die Tiefziehstation (13) und/oder die Siegelstation (15) und/oder die Stanzstation vom Maschinengestell (20) frei herabhängend und an oberhalb der Arbeitsposition in Durchlaufrichtung (10) verlaufenden Führungen (19) geführt werden, und/oder insbesondere
- zwischen zwei im Abstand parallel geführt Behälter-Folienbahnen (2), in denen jeweils getrennt und unabhängig voneinander Kunststoffbehälter (1) tiefgezogen, befüllt, verschlossen und herausgelöst werden, dazwischen Produkte (4) auf einen Produktförderer (6), insbesondere im Gegenlauf, herantransportiert werden, von dem aus die beiden Behälterbahnen (2a,b) mit Produkten (P) versorgt werden.

5. Verfahren nach einem der vorhergehenden Verfahrensansprüche,
**dadurch gekennzeichnet, dass**
- die Picker (8) im Normalbetrieb in Durchlaufrichtung abwechselnd je einer der Behälterbahnen (2a,b) zugeordnet sind und der Behälter (1a,b) füllen, insbesondere jedoch jeder Picker (8) beide Behälterbahnen (2a,b) erreichen kann und bei Problemen der einen Behälterbahn (2a) auch alle Picker (8) nur die Behälter der anderen Behälterbahn (2b) füllen, und/oder insbesondere
- die Picker (8) einzeln jeweils eine Steuerung aufweisen, wobei der in Durchlaufrichtung der Behälterbahn (2) jeweils letzte zugeordnete Picker (8) die momentane Geschwindigkeit dieser Behälterbahn (2a,b) steuert und bei Ausfall dieses letzten Pickers der vorhergehende , der gleichen Behälterbahn (2a,b) zugeordnete, letzte funktionierende Picker (8), diese Aufgabe automatisch übernimmt, und/oder insbesondere
- die Behälterfolie (2) vor dem Tiefziehen aufgeheizt wird mittels Heizplatten (24a,b), die von der Behälterfolie pneumatisch beabstandet oder angenähert werden können und die Behälterfolie (2) im schlupffreien Kontakt mit den in Durchlaufrichtung (10) mit der Behälterfolie (2) mitlaufenden Heizplatten (24a,b) aufgeheizt wird.

6. Verfahren nach einem der vorhergehenden Verfahrensansprüche,
**dadurch gekennzeichnet, dass**
- die Heizplatten (24a,b) schnell abkühlbar sind, insbesondere mittels Durchflutung mit Wasser, insbesondere für ein Wechseln der Werkzeuge (13b,c) der Maschine, und/oder insbesondere
- bei Ende einer Vorratsrolle (5a) für die Behälter-Folienbahn (2) an deren Ende automatisch der Anfang einer Folienbahn von der nächsten Vorratsrolle (5b) angesetzt und von der Folien-Transportvorrichtung (26), insbesondere den Folien-Greifern (27) von außen in der Folienebene umlaufenden Hohlbolzenbuchsenketten (28a,b), automatisch erfasst und transportiert werden, und/oder insbesondere
- die Vorratsrollen (5a,b) auf einen frei auskragenden Tragdorn (30) mit einseitigem Anschlag (29) aufgeschoben werden und der hohle Rollen-Kern (31) pneumatisch auf den Dorn (30) aufgespannt wird durch radial aus dem Dorn (30) pneumatisch ausfahrbare Spannleisten (32), und/oder insbesondere
- beim Thermoformen das Werkzeug (13b,c), insbesondere das die Negativ-Form enthaltende Unterwerkzeug (13c), und/oder das die Positiv-Form enthaltende Oberwerkzeug (13b) gekühlt wird zum schnelleren Verfestigen des geformten Kunststoffbehälters (1), insbesondere mittels Durchströmung von Wasser.

7. Verfahren nach einem der vorhergehenden Verfahrensansprüche,
**dadurch gekennzeichnet, dass**
- die verwendeten Werkzeuge (13b,c, 15b,c) eine maschinenlesbare Codierung (33) aufweisen und nach dem Einsetzen der Werkzeuge von der Maschine automatisch die Codierung (33) gelesen und in den Steuerungen (9) das zugehörige Programm geladen und gestartet wird, und/oder insbesondere
- bei den pneumatisch betriebenen Komponenten der Druck bzw. Unterdruck über proportionale Druckregler digital eingestellt werden können, und/oder insbesondere
- insbesondere bei der Tiefziehstation (13) infolge eines in Querrichtung (12) zur Folie beweglichen Oberwerkzeuges (13b) die Querposition mittels eines Servomotors digital programmierbar und positionierbar ist, und/oder insbesondere
- beim Tiefziehen eine Druckmessung im Werkzeug (13) den Umformdruck ermittelt und **dadurch** so genannte Durchbläser automatisch erkannt und den Steuerungen mitgeteilt wird, so dass keine anschließende Befüllung dieser Behälter erfolgt.

8. Verfahren nach einem der vorhergehenden Verfahrensansprüche,
**dadurch gekennzeichnet, dass**
- die Verfahrwege der Wagen (13a, 15a), sowie der Oberwerkzeuge (13b, 15b) und/oder Unterwerkzeuge (13c, 15c) als auch Amplitude, Schweißzeit und Haltezeit des Ultraschall-Siegelvorganges einzeln digital eingestellt werden können, und/oder insbesondere
- das Stanzen der Behälter (1) aus der Folienbahn (2) mittels eines mit Ultraschall beaufschlagten, insbesondere mit dem Ultraschall-Siegelwerkzeug funktionsvereinigten, einzigen, Stanzwerkzeuges erfolgt, und/oder insbesondere
- beim Stanzen nur ein Anstanzen, kein vollständiges Durchstanzen der Dicke der Folienbahn (2), erfolgt.

9. Verfahren nach einem der vorhergehenden Verfahrensansprüche,
**dadurch gekennzeichnet, dass**
- beim Stanzen ein vollständiges Durchstanzen der Dicke der Folienbahn (2) und Einstanzen in die Dicke der Schutzfolie (25) erfolgt, jedoch über den Umlauf der Stanzkante verteilt mehrere Haltestege zwischen Behälter (1) und Restfolienbahn (2') belassen werden, und/oder insbesondere
- die Schutzfolie (25) nicht synchron mit der Folienbahn (2) mitbewegt wird, sondern nach einer oder mehreren Ausstanzungen an gleicher Stelle geringfügig weiter bewegt wird.

10. Vorrichtung zum Tiefziehen, insbesondere Thermoformen, Füllen, Verschließen und Heraustrennen von napfförmigen Kunststoffbehältern (1) aus einer Behälter-Folienbahn (2),
**dadurch gekennzeichnet, dass**
- Tiefziehstation (13), Füllstation (14), Siegelstation (15) und Auslösestation (16) hintereinander entlang ein und derselben, die Stationen durchlaufenden, Behälter-Folienbahn (2) angeordnet sind,
- die Füllstation (14) ortsfest am Gestell (20) angeordnet ist,
- Tiefzieheinheit (13') und/oder Siegeleinheit (15') und/oder Stanzeinheit in Bewegungsrichtung der Behälter-Folienbahn (2) beweglich am Gestell (20) angeordnet sind, und
- dass die Steuerung (9) der Füllstation (14), insbesondere in Abhängigkeit der Anlieferungsdichte der Produkte (P), die Durchlaufgeschwindigkeit der Behälter-Folie (2) auch durch die Tiefziehstation (13) und/oder die Siegelstation (15) und/oder die Auslösestation (16) steuert.

11. Vorrichtung nach Anspruch 10,
**dadurch gekennzeichnet, dass**
- die Steuerung (9) der Füllstation (14) aus den einzelnen Pickern (8) zugeordneten Steuerungen (9) besteht, die miteinander verbunden sind und kommunizieren, und wobei der der jeweiligen Behälterfolienbahn (2a,b) zugeordnete, in deren Durchlaufrichtung (11) letzte Picker mit seiner Steuerung die Geschwindigkeit dieser Behälterbahn (2) steuert und bei Ausfall dieses letzten Pickers der vorangehende, der gleichen Behälterbahn (2) zugeordnete, letzte funktionierende, Picker dessen Aufgabe automatisch übernimmt, und/oder insbesondere
- die Tiefziehstation (13) als Thermoformstation ausgebildet ist und insbesondere eine Folienheizung (24) umfasst, und/oder insbesondere
- Tiefziehstation (13), Füllstation (14), Siegelstation (15), und/oder Auslösestation (16) ausschließlich hängend am Maschinengestell (20) angeordnet sind.

12. Vorrichtung nach einem der vorhergehenden Vorrichtungsansprüche,
**dadurch gekennzeichnet, dass**
Siegelstation (15) und Stanzstation in einer Station zusammengefasst sind.

13. Vorrichtung nach einem der vorhergehenden Vorrichtungsansprüche,
**dadurch gekennzeichnet, dass**
- Siegelstation (15) und/oder Tiefziehstation (13) entlang von Schienen (19) in Durchlaufrichtung (10) der Behälter-Folienbahn (2) am Maschinengestell (20) verfahrbar sind, und/oder insbesondere
- die Füllstation (14) austauschbar ist gegen eine andere Art von Füllstation, und/oder insbesondere
- jede der Stationen (13, 14, 15) ein eigenes Maschinengestell (20) umfasst, bestehend z.B. aus vier Tragsäulen (20a) und einem davon getragenen, insbesondere viereckig umlaufenden, Oberrahmen (20b) insbesondere am oberen Ende der Tragsäulen (20a), an dem insbesondere die Schienen (19) befestigt sind, und/oder insbesondere
- die Maschine aus den einzelnen Stationen (13,14,15) modulartig zusammengesetzt ist.

14. Vorrichtung nach einem der vorhergehenden Vorrichtungsansprüche,
**dadurch gekennzeichnet, dass**
- als Transportvorrichtungen (26) für die Behälterfolienbahn (2) beidseits neben der Folienbahn (2) umlaufende, deren Außenkante jeweils automatisch greifende und klemmende Hohlbolzenbuchsenketten (28) mit Folien-Greifern (27) verwendet werden, deren Greifer (27) für den Einlauf der Bahn (2) automatisch entgegen der Kraft der die Greifer (27) schließenden Federn (34) geöffnet werden, und/oder insbesondere
- auf der Behälterfolienbahn (2) keine Referenzmarken (23) angeordnet sind, sondern die gesamten Behälter (1) und/oder die auf den Produktförderer (6) ankommenden Produkte P1, P2.. an wenigstens einer Stelle optisch erkannt und deren Weiterbewegung anhand der bekannten Transportgeschwindigkeiten berechnet werden.

15. Vorrichtung nach einem der vorhergehenden Vorrichtungsansprüche,
**dadurch gekennzeichnet, dass**
- die Werkzeuge (13b,c, 15b,c) zum Tiefziehen sowie Siegeln bzw. Stanzen eine variable Breite aufweisen und immer an der dem Produktförderer (6) zugeordneten Seitenkante (13', 15') der Station angelegt werden, und/oder insbesondere
- die Einlauf-Vorrichtung (35) in die Greiferkette (28) für die Folienbahn (2) so gestaltet ist, dass das Ergreifen und Einführen des Anfanges der nächsten Folienbahn ermöglicht wird, ohne die beiden Folienbahnen zu verkleben, indem bei laufender erster Folienbahn hinter das Ende der ersten Bahn automatisch der Anfang der zweiten Folienbahn eingefädelt und ebenfalls ergriffen und transportiert wird, und/oder insbesondere
- auf der von der Folienbahn (2) abgewandten Seite der insbesondere das Unterwerkzeug (13c) bildenden Formplatte (37) als Negativ-Form eine Kühlplatte (36), die insbesondere von Wasser durchströmt wird, angeordnet ist, und/oder insbesondere
- bei der Heizeinheit (24) der Thermoform-Tiefziehstation (13) die in Durchlaufrichtung (10) zyklisch mitlaufende Heizeinheit (24) die oberhalb und unterhalb der Folienbahn (2) angeordneten Heizplatten (24a,b) in Querrichtung (12) pneumatisch auf Abstand zur Folienbahn gebracht werden können und insbesondere mittels Wasser beaufschlagbare Kühlkanäle (38) aufweisen.
